# EUROPEAN PATENT SPECIFICATION

(11) **EP 1 728 819 B1**
(45) Date of publication and mention of the grant of the patent: **29.10.2008**
(21) Application number: 06114603.1
(22) Date of filing: 26.05.2006
(51) Int. Cl.: C08K 5/54, C08K 3/22

(54) **Paint and a production method thereof**
Farbe und Methode zu deren Herstellung
Peinture et son procédé de fabrication

(30) Priority: 27.05.2005 TR 200502005
(43) Date of publication of application: 06.12.2006
(73) Proprietor: Durmus Yasar ve Ogullari Boya Vernik ve Recine Fabrikalari Anonim Sirketi, Izmir (TR)
(72) Inventor: Celiker, Gulsen DYO Boya Fabrikalari Sanayi ve, 35620 Izmir (TR); Yucel, Dilek DYO Boya Fabrikalari Sanayi ve, 35620 Izmir (TR); Uslusoy, Ayten DYO Boya Fabrikalari ve Ticaret, 35620 Izmir (TR); Aydin, Handan DYO Boya Fabrikalari Sanayi ve, 35620 Izmir (TR); Cakaz, Umit DYO Boya Fabrikalari Sanayi ve Ticaret, 35620 Izmir (TR)
(74) Representative: Dericioglu, Ekin

(56) References cited:
- DE-A1- 10 326 815
- US-A- 6 013 372
- US-A1- 2004 127 354

## Description

### Technical Field

This invention relates to the top coat of self-cleaning, oxidative drying paint, showing photo-catalytic effect and being water-based, and the production method thereof.

### Prior Art

Paints showing photo-catalytic effect are manufactured in the known embodiments of the art.

CN1424365 discloses an antibacterial coating and preparation method thereof, which uses photocataytically degradable nano sized titanium dioxide. Said coating is obtained by mixing respectively and proportionally with anatase type nano TiO₂, sodium hexametaphosphate, silicate, inorganic solidifying agents and water.

CN1392210 describes environment-friendly water emulsion paint with a high resistance to abrasion and the production method thereof. Said paint is achieved through water emulsion, network structured material, material with nano function, material with hydrophilic and hydrophobic radicals, solidifying agent and auxiliary elements.

JP2000234070 describes a waterproof and antibacterial paint with a high resistance to getting dirty, obtained by mixing an ethyl silicate and silane binding agent with an alcohol solution comprising photo-catalytic dispersed as titanium dioxide and silicone dioxide and by adding polyalkyl siloxane composition in the attained mixture and methylmethoxy siloxane into a solved isopropyl alcohol solution.

JP2001055799 discloses a transparent coating for external walls, comprising anatase type nano-titanium dioxide photo-catalyst.

However in the abovementioned embodiments water resistance feature of the products obtained is low due to their hydrophilic structures. It is necessary to apply separate wall paint before applying photo-catalytic paint. The said coat leads to waste of time and raises the labor costs and final cost. In addition the products of the prior art do not have good mechanic characteristics of resistance to oxidation and dirt, UV, abrasion and alkali. And they also do not have the required barrier and antibacterial features.

### Brief Description of the Invention

The object of this invention is to realize a top coat of self-cleaning, oxidative drying paint, showing photo-catalytic effect and being water-based, and the production method thereof.

Other object of this invention is to realize paint with high mechanic features of UV resistance, alkali resistance, resistance to corrosion and getting dirty and abrasion, having a photo-catalytic effect and a production method thereof.

Another object of this invention is to realize wipeable mat paint photocatalytically effective, having antibacterial and barrier features and the production method thereof.

Another object of this invention is to realize paint having a photo-catalytic effect, being produced with less energy, less labor cost and more economically and a production method thereof.

In order to achieve the objects of this invention, the said method basically comprises the following steps:
- partial hydrolysis of silanes,
- modifying the surface of nano-sized metal oxide particles with the obtained hydrolysate,
- dispersion of nano-sized metal oxides with modified surfaces within the resins,
- mixing the obtained product with certain paint formulations known in the art.

### Detailed Description of the Invention

Various features of the paint obtained upon the embodiments of the invention is shown in the accompanying drawings, in which;

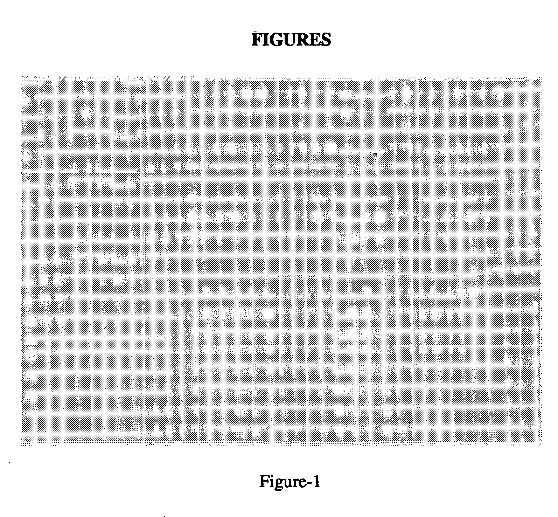

Figure 1 shows the view of a panel after uv+exhaust+uv testing, coated with paint known in the prior art.

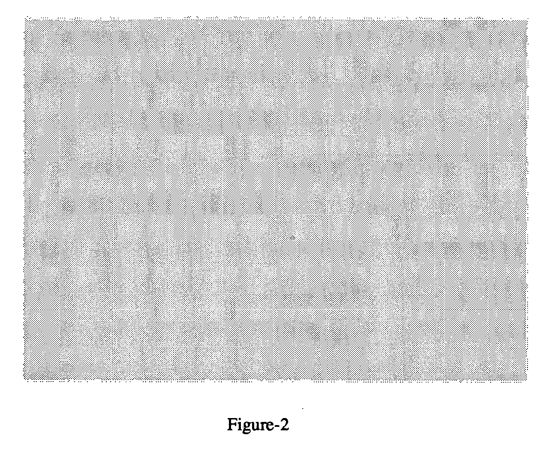

Figure 2 shows the view of a panel after uv+exhaust+uv testing, coated with the inventive paint.

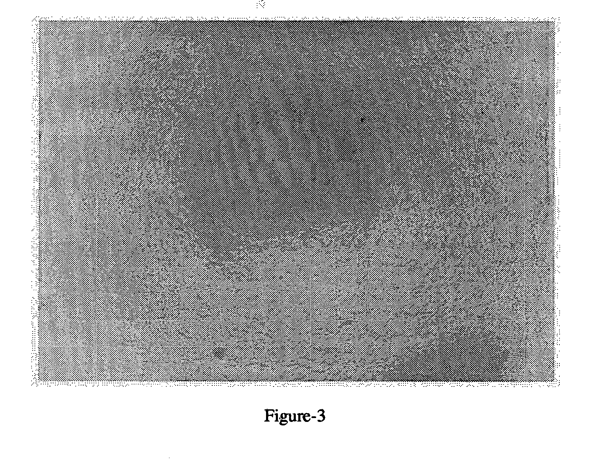

Figure 3 shows the view of a panel after uv+exhaust testing, coated with paint known in the prior art.

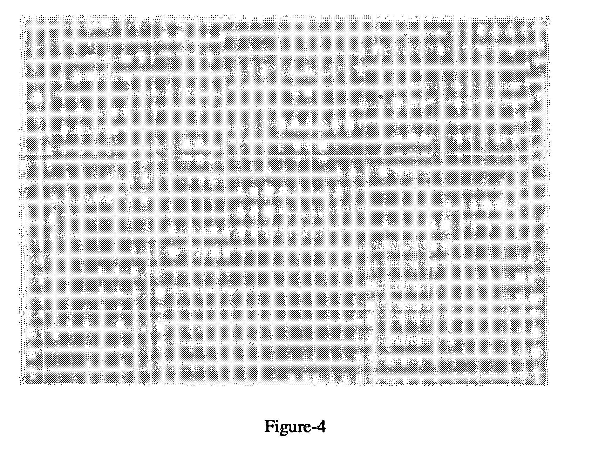

Figure 4 shows the view of a panel after uv+exhaust testing, coated with the inventive paint.

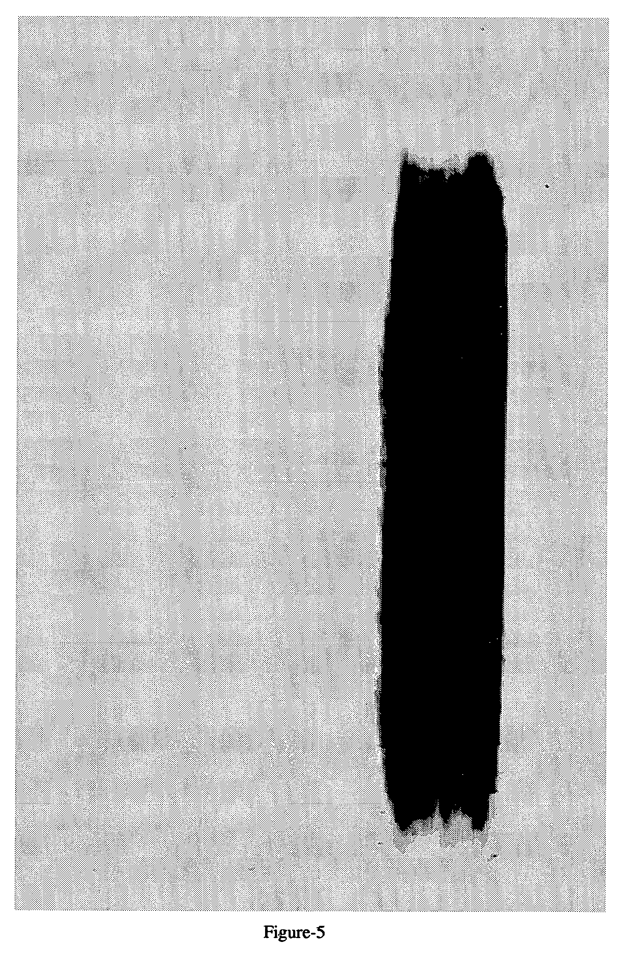

Figure 5 shows the view of a panel after the rubbing test, coated with paint known in the prior art.

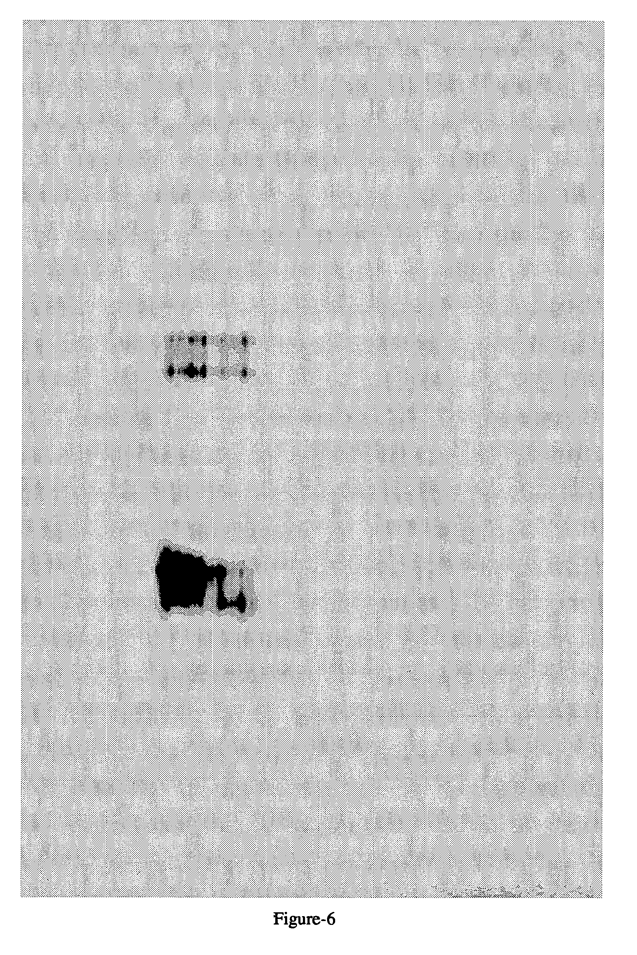

Figure 6 shows the view of a panel after the rubbing test, coated with the inventive paint.

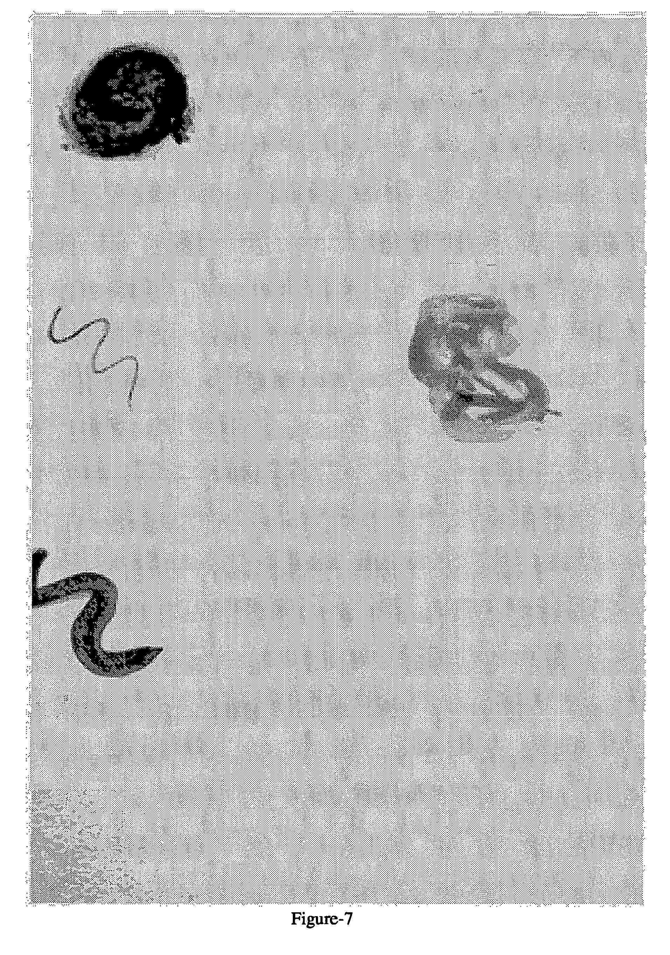

Figure 7 shows the view of a panel before stain test, coated with paint known in the prior art (upper row left to right mud, oil; middle row left to right pencil, ketchup; lower row watercolors).

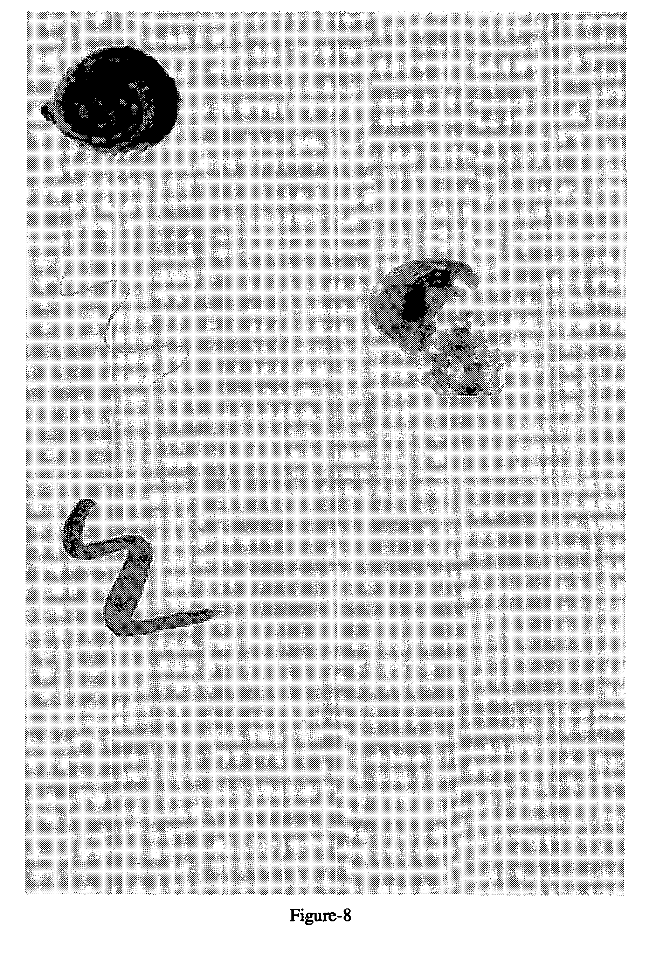

Figure 8 shows the view of a panel before stain test, coated with the inventive paint (upper row left to right mud, oil; middle row left to right pencil, ketchup; lower row watercolors).

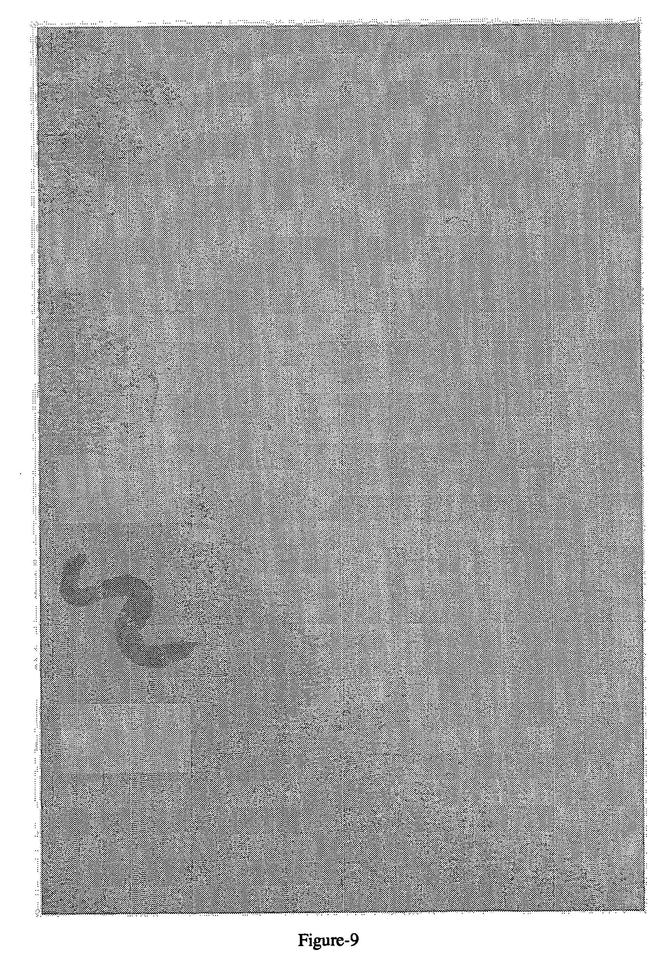

Figure 9 shows the view of a panel after the stain test, coated with paint known in the prior art (upper row left to right mud, oil; middle row left to right pencil, ketchup; lower row watercolors).

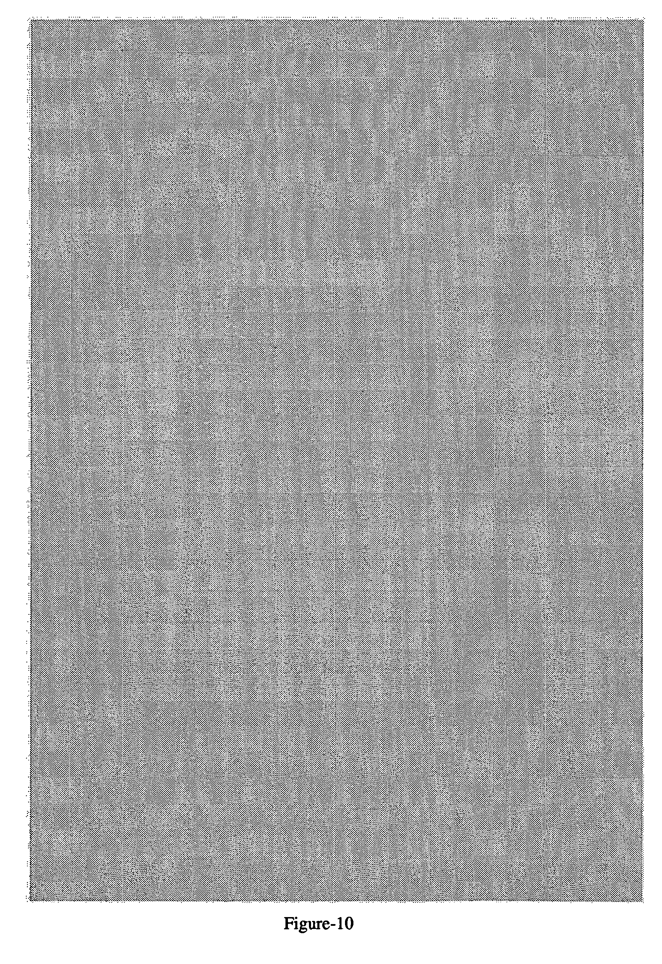

Figure 10 shows the view of a panel after the stain test, coated with the inventive paint (upper row left to right mud, oil; middle row left to right pencil, ketchup; lower row watercolors).

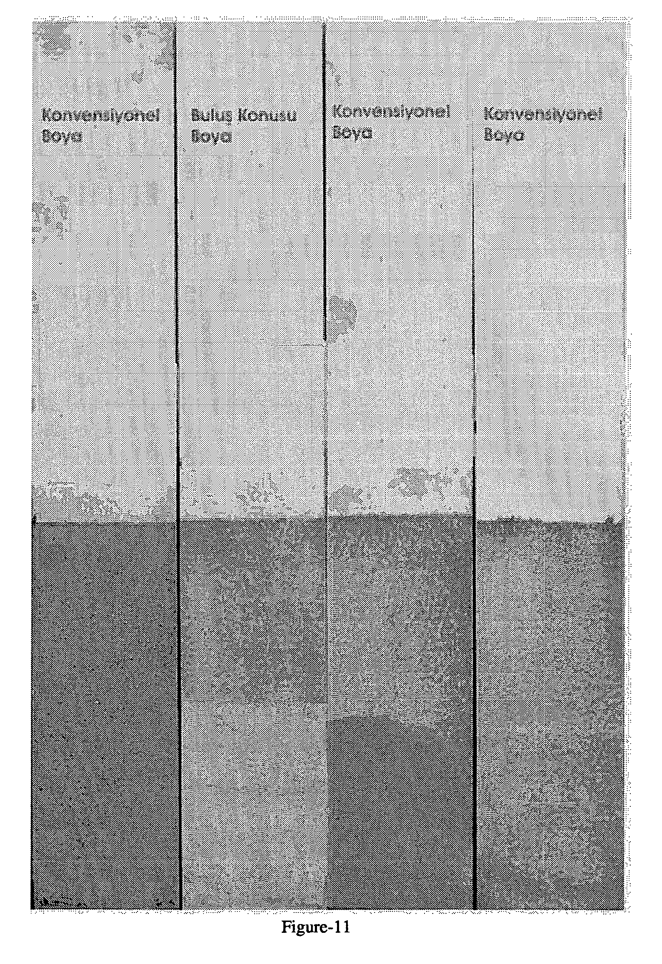

Figure 11 shows the view of a panel after resistance to getting dirty test, coated with the paint known in the prior art and the inventive paint.

The inventive paint with photo-catalytic effect is produced in a process consisting of a reactor with a strong mixer, a condenser known in the art and a separator.

Silanes are partially hydrolyzed by controlling their molecule weights. Hydrolysis takes place within at least 24 hours at room temperature; the pH value in the medium is preferably adjusted as maximum 2.0 for the reaction. Acid catalysts used are preferably strong acids. The proportion of acid catalysts to silanes is maximum 0.5% by weight. The hydrolysate obtained is transparent and its minimum shelf life is 6 months.

In the next step partially hydrolyzed silanes are added to the nano-sized anatase type calcined titanium dioxide. The proportion of hydrolysate used to titanium dioxide is between 25-100% by weight. The size of nano-particles can be between 5-25 nm. The process takes place at minimum 100°C.

Hydrolyzed silanes can be added alone or with some solvents in another preferred embodiment of the invention. The silanes used can be selected among silanes carrying hydrolyzed group, methyl triethoxy silane, methyl methoxy silane, tetra methyl ortho silicate, tetraethyl silicate, 3-glycidyloxypropyl trimethoxy silane etc. or non-hydrolyzed silanes, silanes carrying vinyl, metacryloyl, phenyl, fluorine, amino, mercapto etc. group or a mixture thereof in certain proportions. The surface of the titanium dioxide is modified with the obtained hydrolysate. The said titanium dioxide is dispersed in resins which are water-based and oxidative drying as known in the art.

A top coat of paint with photo-catalytic effect is achieved by adding the product produced to the paint formulations known in the art in different proportions.

In another preferred embodiment of the invention, hydrophobic feature of the paint with photo-catalytic effect can be improved by using wax and/or silicone etc.

In an alternative embodiment of the invention basic catalysts can be used for hydrolysis reaction and the reaction can take place in the basic medium.

### Industrial Applicability of the Invention

As a result of the inventive production method paint with photo-catalytic effect is obtained, with high water-repellent and self-cleaning feature. The paint with photo-catalytic feature has higher mechanical and chemical features such as rubbing resistance, corrosion resistance and uv resistance and is scratchproof, shockproof and dirt-repellent when compared to the paints of the prior art. The said paint is an antibacterial wipeable mat paint with a barrier feature. Durability of paint is high and production is easy, therefore more economical, and energy and labor costs are low since there is no need for extra application.

### The performance of the invention is assessed through the following tests:

### Test 1: Exhaust Test

The paints are applied on the paste surfaces in 2-coats by being thinned according to their thinning proportions. Testing panels are kept 24 hours for drying. The panels are subject to a two-stage test. In the first stage applied panels are subject to exhaust gas from a 5 cm distance for 5 minutes. The dirt on the panel due to the exhaust gas is assessed. One half of the dirty panel is covered with aluminum foil paper and then it is assessed that the panels are cleaned in the course of time (maximum 24 hours) by being subject to the UV-C light.

In the second stage applied panels are subject to the UV-C light for 24 hours. Thereafter applied panels are subject to exhaust gas from a 5 cm distance for 5 minutes. The dirt on the panel due to the exhaust gas is assessed. One half of the dirty panel is covered with aluminum foil paper and then it is assessed that the panels are cleaned in the course of time (maximum 24 hours) by being subject to the UV-C light.

### Test 2: Methylene Blue Test

The paints are applied on the paste surfaces in 2-coats by being thinned according to their thinning proportions. Testing panels are kept 24 hours for drying. 0,05% methylene blue solution prepared in water is sprayed with hydrate in a homogeneous way from 100 cm. Methylene blue solution should not exude from the surface. The panels turn to white from blue in the course of time (maximum 24 hours) under the sun light.

### Test 3: Rubbing resistance

180 □m damp film is rapidly applied to a black Lenetta card with the help of automatic film applicator by 25,4 mm/sn. Films applied to 3 separate panels are kept at 23±2°C in a chamber with 50%±5% moist in a horizontal position for 7 days.

After 7 days of drying the paint films are rubbed with a Sheen rubbing device. Panels are located perpendicularly on the metal strips on the device, and the brushes are located on the upper arrangement of the device, which are 454 g and made from hard nylon kept for one night in 1% detergent solution and which has plastic gasket and retainer. 10g standard abrasion liquid (Lenetta standardized scrub medium, abrasive type) is weighed onto brush bristles and brush way on the panel is drenched with 5 ml water. The counter of rubbing device is reset and 10 g abrasion liquid with 5 ml water is added under the brush in every 400 tour.

The number of tours necessary for complete abrasion of paint film suitable to the 12,7 mm width of the metal strip on which the Lenetta card is placed is recorded. By striking an average of 3 panels tested, the number of tours of the rubbing resistance is recorded.

### Test 4: Stain Test

The paints are applied on the paste surfaces in 2-coats by being thinned according to their thinning proportions. Testing panels are kept 24 hours for drying. Stains are formed on the applied panels by using materials like oil, ketchup, oily mud, pencil and watercolors. The stains are kept at room temperature for at least one hour for drying. The stains are wiped out with a damp detergent cloth for 20 times back and forth movement. Surfaces cleaned with a dry cloth are dried. The stain left on the wiped surface and change in the brightness is assessed.

### Test 5: Dirt-repellency Test

The external wall coating prepared is applied on the eternite panel with the help of paint roller. Then the applied panels are kept for one night in a 23°C 50% humid medium. After one night of drying one part of the panel is covered with aluminum foil paper, and settled at 45° angle in a place where it can receive sunlight. The panels are subject to sunlight in the same place for three days. After three days panels are taken indoors and aluminum foil paper is removed and a mixture of iron oxide and pigment is applied thereon with a brush. The mixture is dried at room temperature for three hours. It is dried in a drying oven for one hour at 60°C and then kept at room temperature for one hour again. The panels are washed with a cloth under tap after waiting for one hour at room temperature. The dirt-repellency is assessed by considering the proportion of iron oxide pigment left on the area subject to sunlight and the area covered with aluminum foil paper. When paint has high dirt-repellency the area subject to sunlight should not get dirty. The panels are assessed by this criterion.

The iron oxide pigment mixture formulation is 245 g water, 125 g brown iron oxide pigment and 5 g dispersion agent.

Within the framework of this basic concept, various embodiments can be developed for the inventive paint and production method thereof, and it is not intended that this invention be limited to the examples given above, and the invention is as stated in the enclosed claims.

## Claims

1. A method for producing a photocatalytically effective, self cleanable, highly water repellent, oxidative drying, water-based wipeable mat paint with antibacterial and barrier features, having improved mechanical and chemical features such as UV resistance, alkali resistance, abrasion resistance, corrosion resistance, dirt-repellency; comprising the following steps:
i. partial hydrolysis of silanes carrying methyl triethoxy silane, methyl methoxy silane, tetra methyl ortho silicate, tetraethyl silicate, 3-glycidyloxypropyl trimethoxy silane, etc. or non-hydrolyzed silanes, silanes carrying vinyl, metacryloyl, phenyl, fluorine, amino, mercapto, etc. group or silanes selected among the combinations of the said silanes in certain proportions, at room temperature for at least 24 hours, in a medium whose pH is not more than 2,
ii. modification of the surfaces of calcined titanium dioxide at an ambient temperature of 100°C upon addition of the hydrolysates obtained by the partial hydrolysis of silanes to 5-25 nm, preferably about 5 nm, anatase type calcined titanium dioxide particules including calcium carbonate,
iii. dispersion of nano-sized calcined titanium dioxides with modified surfaces within water based, oxidative drying resins,
iv. mixing the obtained product with paint fillers known in the art in certain proportions.

2. A method for producing paint according to Claim 1, **characterized in that** the acids to be used are selected among the group of strong acids.

3. A method for producing paint according to Claim 1, **characterized in that** as a result of the use of basic catalysts for silane hydrolysis, the reaction is realized in the basic medium.

## Patentansprüche

1. Ein Verfahren zur Herstellung eines photokatalytisch effektiven, selbstreinigenden, stark wasserabstoßenden, oxidativ trocknenden, wasserbasierten matten Lacks mit antibakteriellen- und sperrenden Eigenschaften sowie mit verbesserten mechanischen und chemischen Eigenschaften wie UV-Widerstand, Alkali-Beständigkeit, Abreibungsbeständigkeit, Korrosionsbeständigkeit, Schmutzabstoßeffekt; umfassend die folgenden schritte:
i. die teilweise Hydrolyse der Silane, die Methyl Triethoxy, Methyl Methoxy Silan, Tetra Methyl Ortho Silikat, Tetraethyl Silikat, 3-Glycidylokxypropyl Trimethoxy Silan usw. tragen oder nicht hydrolisierter Silane, Vinyl, Metacryloyl, Phenyl, Fluor, Amino, Mercapto oder ähnliche Gruppen tragenden Silane oder der Silane, die aus den Kombinationen der genannten Silane in bestimmten Anteilen gewählt sind, bei Zimmertemperatur mindestens für 24 Stunden in einem Medium, desen pH Wert nicht mehr als 2 ist,
ii. Modifizierung der Oberflächen von kalziniertem Titandioxid bei einer Umgebungstemperatur von 100 °C nach Beimischung von Hydrolysaten, die durch die teilweisen Hydrolyse von Silanen bis 5 - 25 nm, vorzugsweise 5 nm erhalten wurden, Kalziumkarbonat enthaltende Partikel des kalziniertem Titandioxids von Anatas-Art,
iii. Ausscheidung von in der Nano-Größe kalzinierten Titandioxide mit modifizierten Oberflächen in einem wasserbasierten, oxidativ trocknenden Harz,
iv. Mischung des erhaltenen Produktes mit Lackfüller in einer in der Technik bekannten Weise.

2. Ein Verfahren zur Herstellung eines Lacks nach Anspruch 1, **dadurch gekennzeichnet, daß** die angewendeten Säuren aus der Gruppe von starken Säuren gewählt sind.

3. Ein Verfahren zur Herstellung eines Lacks nach Anspruch 1, **dadurch gekennzeichnet, daß** die Reaktion infolge der Anwendung von basischen Katalysatoren in einem basischen Medium ausgeführt wird.

## Revendications

1. Une méthode de produire une peinture mat, qui est nettoyable en soi-même, effective une manière photo-catalytique, fort l'eau-repoussant, effaçable en tant qu'à base d'eau et qui a une particularité de séchage oxydatif, étant perfectionné par des caractéristiques machinales et chimiques avec des caractères antibactériens et barrières comme résistance d'UV, résistance d'alcali, résistance d'abrasion, résistance de corrosion, répulsion d'ordure, ayant étapes suivantes:
**i.** hydrolyse partielle de silanes portant méthyle triéthoxy silane, méthyle méthoxy silane, tétra méthyle ortho silicate, tétra éthyle silicate, 3-glycidyloxypropyl triméthoxy silane, etc., ou silanes non-hydrolysés, silanes portant groupe de vinyle, de métacryloyle, de phényle, de fluorine, d'amino, de mercapto, etc. ou silanes choisis parmi combinaisons dédits silanes en quelques proportions à la température de chambre pendant au moins 24 heures et dans le milieu où PH est plus de 2,
**ii.** modification de surfaces de titanium dioksides calcinés dans la température d'un ambiant de 100 °C par l'addition de hydrolysats obtenus par hydrolyse partielle de silanes à 5-25 nm, préférablement à environ 5 nm, de particules de titanium dioxide calciné de type anatase y compris carbonate de calcium.
**iii.** dispersion de titanium dioksides calcinés de nano-taille avec surfaces modifiées dans les résines séchages d'oxydatives qui sont à base d'eau,
**iv.** mixage de produit, qui a été obtenu, avec un remplisseur de peinture qui est connu dans l'art antérieur selon quelques proportions.

2. Une méthode de produire une peinture selon la Revendication 1, **caractérisé en ce que** les acides, qui on doit utiliser, sont sélectionnés parmi groupe d'acides forts.

3. Une méthode de produire une peinture selon la Revendication 1, **caractérisé en ce que** la réaction est réalisée dans le milieu basique comme un résultat d'utilisation de catalyseurs basiques pour l'hydrolyse de silane.
